(19) Europäisches Patentamt
European Patent Office
Office européen des brevets

(11) EP 2 215 675 B1

(12) **FASCICULE DE BREVET EUROPEEN**

(45) Date de publication et mention de la délivrance du brevet:
**30.11.2011 Bulletin 2011/48**

(21) Numéro de dépôt: **08845518.3**

(22) Date de dépôt: **31.10.2008**

(51) Int Cl.:
***H01M 2/38*** *(2006.01)* ***H01M 10/06*** *(2006.01)*
***H01M 10/44*** *(2006.01)* ***H01M 10/48*** *(2006.01)*

(86) Numéro de dépôt international:
**PCT/EP2008/064776**

(87) Numéro de publication internationale:
**WO 2009/056619 (07.05.2009 Gazette 2009/19)**

(54) **PROCEDE ET DISPOSITIF DE CHARGE RAPIDE D'UN ACCUMULATEUR**

VERFAHREN UND EINRICHTUNG ZUM SCHNELLEN LADEN EINER BATTERIE DES AKKUMULATORTYPS

METHOD AND DEVICE FOR QUICKLY CHARGING AN ACCUMULATOR-TYPE BATTERY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.10.2007 FR 0758745**

(43) Date de publication de la demande:
**11.08.2010 Bulletin 2010/32**

(73) Titulaires:
- **Electricité de France**
  **75008 Paris (FR)**
- **Université Montpellier 2 Sciences et Techniques**
  **34000 Montpellier (FR)**

(72) Inventeurs:
- **ALZIEU, Jean**
  **F-75011 Paris (FR)**
- **GLAIZE, Christian**
  **F-34170 Castelnau le Lez (FR)**
- **MAMADOU, Kelli**
  **F-97200 Fort-de-France (FR)**
- **N'GUYEN, Phung**
  **F-77210 Avon (FR)**
- **SCHWEITZ, Guy**
  **F-77940 Blennes (FR)**

(74) Mandataire: **Texier, Christian et al**
**Cabinet Regimbeau**
**20, rue de Chazelles**
**75847 Paris Cedex 17 (FR)**

(56) Documents cités:
**EP-A- 1 587 202**
**DE-A1- 10 128 637**
**US-A- 6 008 624**
**US-A1- 2003 094 927**
**US-B1- 6 229 285**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne la charge d'un accumulateur au plomb notamment à électrolyte liquide.

Un accumulateur au plomb est une source d'énergie électrique transportable. Il peut être utilisé directement pour alimenter des composants électriques (particulièrement dans un véhicule) ou indirectement pour assurer une continuité de fourniture électrique lorsque la source principale d'énergie disparaît (notamment pour des applications photovoltaïques).

Un accumulateur au plomb doit être chargé à l'aide d'une source externe (par exemple une dynamo ou un alternateur dans le cas d'un véhicule ou un réseau électrique ou encore un panneau solaire dans le cas d'un système photovoltaïque).

Un accumulateur au plomb a pour avantage d'être peu cher et capable de fournir des courants élevés, ainsi que d'accepter un grand nombre de cycles de charge/décharge.

Une énergie électrique, circulant entre les électrodes d'un accumulateur au plomb provient d'une réaction d'oxydoréduction réversible correspondant dans un sens à la charge et dans l'autre à la décharge de l'accumulateur au plomb. Ainsi, au sein d'un accumulateur au plomb, la réaction d'oxydoréduction se décompose en deux demi-réactions à chaque électrode :

- A l'électrode négative (anode en décharge / cathode en charge):

$$PbSO_{4(s)} + H^+ + 2e^- \xrightleftharpoons[\text{décharge}]{\text{charge}} Pb_{(s)} + HSO^-_{4(aq)}$$

- A l'électrode positive (cathode en décharge / anode en charge):

$$PbSO_{4(s)} + 2H_2O \xrightleftharpoons[\text{décharge}]{\text{charge}} PbO_{2(s)} + HSO_{4(aq)} + 3H^+ + 2e^-$$

L'électrolyte liquide est de l'acide sulfurique ($H_2SO_4$) qui dans un milieu aqueux se dissocie et participe aux réactions en fournissant des ions $H^+$ et $HSO_4^-$.

Comme le montre cette formule, une concentration de l'électrolyte augmente lors d'une charge de l'accumulateur. Du fait d'une densité plus élevée de l'acide sulfurique ($H_2SO_4$) par rapport à celle de l'eau, l'acide a tendance à suinter des électrodes poreuses et à s'accumuler au fond du bac; créant ainsi un gradient de concentration vertical. Il en résulte que la concentration d'acide sulfurique reste faible en surface et augmente avec la profondeur. Ce phénomène, que l'on appelle stratification de la concentration de l'électrolyte, s'accentue donc avec l'état d'avancement de la charge.

Lorsqu'un accumulateur stratifié entame une étape de décharge, ce sont en réalité les zones des électrodes qui seront au contact des plus fortes concentrations d'acide sulfurique qui seront les plus sollicitées. Une conséquence est une fatigue accélérée des parties inférieures des électrodes, et par suite, une perte de capacité et une altération de la durée de vie de l'accumulateur.

Pour remédier à ce contrecoup néfaste de la stratification, il existe des solutions connues dans l'état de l'art pour homogénéiser l'électrolyte (étape appelée "déstratification"). Parmi ces solutions, certaines décrivent des éléments physiques présents au sein de l'accumulateur pour forcer l'homogénéisation de l'électrolyte par leur mouvement ou encore l'intervention d'éléments extérieurs. Mais ces solutions sont coûteuses et difficiles à mettre en oeuvre.

Une autre solution de déstratification, qui n'utilise pas d'éléments extérieurs à l'accumulateur, est celui d'une convection forcée par création de dégagement gazeux au sein de l'accumulateur.

Une réaction généralement utilisée pour créer ce dégagement gazeux est l'électrolyse de l'eau qui s'opère spontanément dans un accumulateur au plomb à électrolyte liquide quel que soit son état de fonctionnement (chargé, déchargé ou au repos). L'électrolyse de l'eau produit un dégagement de dihydrogène à l'électrode négative et de dioxygène à l'électrode positive selon la réaction suivante :

$$2H_2O \rightarrow 2H_2 + O_2$$

La solution consiste donc à contrôler cette électrolyse afin de produire un dégagement gazeux nécessaire au brassage de l'électrolyte par convection forcée lors d'une étape de déstratification.

Comme expliqué plus tard, l'étape de déstratification (appelée « étape de surcharge ») est généralement effectuée en fin de charge. Traditionnellement, le temps consacré à une charge d'un accumulateur au plomb utilisant cette solution dure de dix à quatorze heures. L'instauration des postes de huit heures (trois-huit) a contraint les constructeurs à mettre au point des programmes de charge en huit heures, parfois qualifiés de « charge rapide ». Cette contraction dans le temps peut se faire sans changer fondamentalement les méthodes traditionnelles de charge.

Cependant, raccourcir encore le temps de charge, en deçà de huit heures, présente des difficultés. Il apparaît en effet que plus le temps de charge est raccourci, moins l'étape de déstratification est contrôlable.

On connaît dans le domaine le document DE 101 28 637 concernant un procédé de charge d'un accumulateur, en particulier à électrolyte liquide, en plusieurs cycles de charge consécutifs, dans un premier cycle de charge, l'accumulateur étant chargé jusqu'à l'obtention d'une tension de charge définie avec un courant de charge constant, et dans un autre, en particulier un deuxième cycle de charge, l'accumulateur est chargé avec des impulsions d'énergie consécutives, dans lequel le courant de charge est commuté de manière périodique entre un courant de charge de base et un courant de charge à impulsion, caractérisé en ce que le courant de charge à impulsion est sélectionné de façon à être inférieur ou égal au courant de charge pendant le premier cycle de charge, et le courant de charge de base est défini de façon à être inférieur au courant de charge à impulsion.

On connaît également le document US 2003/0094927 concernant un appareil pour recharger une batterie rechargeable fournissant un courant de surcharge pendant et avant la recharge complète de la batterie pour améliorer la stratification de ladite batterie.

Dans le domaine, on connaît aussi les documents US 6,229,285, US 6,008,624 et EP 1 587 202.

Toutefois, aucune de ces solutions n'a donné entière satisfaction quant au contrôle de la déstratification de l'accumulateur.

Un but de l'invention est donc de proposer un procédé permettant de raccourcir le temps de charge d'un accumulateur au plomb tout en gardant le contrôle de la déstratification de l'accumulateur.

A cet effet, l'invention prévoit un procédé pour charger un accumulateur au plomb selon la revendication 1 annexée.

Avantageusement, mais facultativement, le dispositif comporte au moins l'une des caractéristiques suivantes :

- la décroissance estimée est une décroissance linéaire,
- le courant de surcharge a une valeur supérieure à Ca/20.
- l'étape de mesure du courant d'acceptance est mise en oeuvre une fois une tension de dégagement gazeux imposée à l'accumulateur,
- l'étape de mesure est effectuée après un temps de latence donné,
- au début de l'étape de mesure du courant d'acceptance, la tension aux bornes de l'accumulateur suit un créneau dont la valeur est inférieure à la tension de dégagement gazeux,
- au début de l'étape de mesure du courant d'acceptance, la valeur du courant est nulle ou négative,
- des étapes de surcharge et des étapes de mesure du courant d'acceptance se succèdent,
- le procédé comprend en outre une étape de charge à courant constant et / ou une étape de charge à tension constante,
- un courant supplémentaire de déstratification est injecté à l'accumulateur,
- le courant de surcharge décroît selon une décroissance estimée du courant d'acceptance durant l'étape de surcharge, le courant de déstratification est calculé en fonction d'un temps donné de charge de l'accumulateur,
- le courant de surcharge est déterminé à partir d'une mesure du courant d'acceptance et d'un calcul d'un courant de déstratification,
- le courant de déstratification est calculé à partir de la formule suivante :

$$I_{DESTRAT(n)} = \frac{Q_{Drest(n)}}{t_{final} - t_{(n)}}$$

  où $I_{DESTRAT(n)}$ est le courant de déstratification injecté à l'accumulateur lors d'une étape de surcharge n, $Q_{Drest(n)}$ est une quantité d'électricité de déstratification qu'il reste à injecter à l'accumulateur déterminé à partir d'une quantité d'électricité totale de déstratification, $t_{final}$ est une durée impartie pour la charge de l'accumulateur, et $t_{(n)}$ est une durée entre le début de la charge et le début de la nième étape de surcharge n,
- la quantité d'électricité totale de déstratification est déterminée à partir d'un pourcentage de la quantité d'électricité

totale à charger,

- l'invention concerne également un dispositif de charge d'un accumulateur caractérisé en ce qu'il comprend des moyens de mise en oeuvre d'un procédé selon l'invention.

D'autres caractéristiques, buts et avantages de la présente invention apparaîtront à la lecture de la description détaillée qui va suivre, au regard des dessins annexés, donnés à titre d'exemples non limitatifs et sur lesquels:

- la figure 1 est un graphe présentant une courbe d'acceptance d'un accumulateur,
- la figure 2 est un graphe présentant une courbe du courant circulant entre les électrodes d'un accumulateur chargé suivant un profil de type IUI,
- la figure 3 est un graphe présentant une courbe de la tension aux bornes d'un accumulateur chargé suivant un profil IUI,
- la figure 4 est un graphe présentant les courbes du courant et de la tension d'un accumulateur chargé,
- la figure 5 est un graphe présentant une courbe de courant circulant entre les électrodes d'un accumulateur chargé selon une variante du procédé selon l'invention,
- la figure 6 est un graphe présentant une courbe de tension aux bornes d'un accumulateur chargé selon une variante du procédé selon l'invention,
- la figure 7 est un graphe présentant les courbes du courant et de la tension d'un accumulateur chargé suivant une réalisation possible du procédé selon l'invention.

L'invention concerne donc un procédé pour charger un accumulateur au plomb, comprenant une étape de surcharge durant laquelle un courant de surcharge est imposé à l'accumulateur et une étape de mesure d'un courant d'acceptance, le courant de surcharge étant supérieur au courant d'acceptance mesuré.

Dans la suite du document, nous définirons par « courant de surcharge », le courant imposé à l'accumulateur durant une étape de surcharge.

Comme expliqué précédemment un phénomène d'électrolyse de l'eau s'opère spontanément dans un accumulateur au plomb notamment à électrolyte liquide quel que soit son état de fonctionnement. Cette électrolyse de l'eau produit un dégagement gazeux. Au-delà d'un certain seuil (par exemple un seuil de débit de dégagement gazeux), le dégagement gazeux est considéré comme « appréciable ». A ce seuil de dégagement gazeux, correspond un courant seuil qui circule entre les électrodes appelé « courant d'acceptance » et que nous noterons « $I_{ACCEPTANCE}$ » dans la suite de la description. Ainsi, si le courant circulant entre les électrodes de l'accumulateur est supérieur au courant d'acceptance, le dégagement gazeux devient appréciable.

La figure 1 présente un graphe ayant en ordonnée le courant circulant entre les électrodes d'un accumulateur et en abscisse l'état de charge de l'accumulateur. Cet état de charge peut être représenté par un pourcentage de charge de l'accumulateur ou par un temps de charge de l'accumulateur ; dans tous les cas, l'axe des abscisses est tel que la charge de l'accumulateur augmente avec cet axe. Sur le graphe, une courbe 1 représente l'ensemble des valeurs d'un courant d'acceptance $I_{ACCEPTANCE}$ de l'accumulateur en fonction de l'état de charge de l'accumulateur. Cette courbe est appelée « courbe d'acceptance » et n'est pas fixée. Elle dépend de nombreux paramètres dont notamment la température, le régime de charge, la qualité de l'alliage, l'âge de l'accumulateur et son historique.

Sur la figure 1, il est à noter que la valeur du courant d'acceptance diminue avec l'état de charge de l'accumulateur tandis qu'en début de charge elle est maximale avec une variation di/dt maximale en valeur absolue au départ. La valeur de ce maximum est fonction de la capacité de l'accumulateur et de la géométrie de ses électrodes. Cette variation du courant d'acceptance est fonction, notamment de l'état initial de l'accumulateur (profondeur de décharge), de son historique (nombre et nature des cycles charge/décharge effectués) et du régime de charge.

Ainsi à un état de charge Ed donné de l'accumulateur, on injecte aux électrodes un courant Id. Ce courant Id décomposé en deux parties la et Ib par la courbe d'acceptance 1 tel que Id = Ia + Ib. La valeur « la » représente le courant d'acceptance de l'accumulateur à un état de charge Ed, c'est-à-dire la valeur maximale de courant au-delà de laquelle le phénomène de dégagement gazeux devient appréciable. La valeur « la » représente donc la quantité de courant qui est utilisée pour la charge proprement dite de l'accumulateur (en réalité, cette valeur comprend également un terme négligeable affecté à un dégagement gazeux non appréciable). La valeur « Ib », quant à elle, représente la quantité de courant, en surplus du courant d'acceptance, qui est utilisée pour le phénomène d'électrolyse de l'eau et donc de déstratification. C'est pourquoi la valeur « Ib » d'un courant injecté est appelée « courant de déstratification ». Ainsi, nous définissons que pour tout courant injecté à un accumulateur, la partie se situant en dessous de la courbe d'acceptance 1 est utilisée pour la charge de l'accumulateur, et la partie se situant au dessus est utilisée pour la déstratification de l'accumulateur.

Tout au long de la charge, le courant d'acceptance évolue selon une courbe décroissante. Il en résulte qu'un état de charge strictement complet est un état asymptotique jamais atteint. En pratique, l'état de charge dit « complet » obtenu à la fin d'une charge traditionnelle, résulte d'un compromis entre une durée de charge raisonnable, un état de

charge suffisant et une homogénéité de l'électrolyte acceptable.

Dans l'état de l'art, la phase de déstratification est effectuée en fin d'opération, au moment où le courant d'acceptance de l'accumulateur est suffisamment faible pour être négligé. Le courant de déstratification est alors assimilable au courant injecté, ce qui facilite son évaluation, son contrôle et donc la gestion de la déstratification de l'électrolyte.

Des expériences montrent que le dégagement gazeux devient appréciable à partir d'un seuil de tension (qui se situe selon une fourchette statistique entre 2,3 V et 2,8 V environ pour un élément de 2V par exemple). Ce seuil de tension dépend de la température, du régime de charge, de la qualité de l'alliage, de l'âge de l'accumulateur et de son historique. Ce seuil est appelé tension de dégagement gazeux ($V_{DG}$). Ainsi quand la tension aux bornes de l'accumulateur est imposée à une tension de dégagement gazeux prédéterminée (dépendant par exemple du régime de charge imposé à l'accumulateur), le courant circulant entre les électrodes suit une courbe d'acceptance (limite du dégagement gazeux) correspondant au dégagement gazeux de cette tension de dégagement gazeux. Ainsi nous appellerons par la suite, « tension de dégagement gazeux », une tension aux bornes de l'accumulateur prédéterminée correspondant à un seuil de dégagement gazeux appréciable et dépendant notamment du régime de charge voulu pour l'accumulateur. Nous appellerons « courant d'acceptance », un courant de charge circulant entre les électrodes d'un accumulateur lorsqu'une tension de dégagement gazeux est imposée aux bornes de cet accumulateur.

En référence aux figures 2 et 3, nous allons décrire une charge avec un profil du type IUI d'un accumulateur, connue de l'état de l'art. La figure 2 présente un graphe ayant en abscisse l'état de charge de l'accumulateur et en ordonnée le courant circulant entre les électrodes de cet accumulateur. La figure 3 présente un graphe avec en abscisse l'état de charge de l'accumulateur et en ordonnée la tension aux bornes de l'accumulateur.

Une charge de type IUI se décompose en trois étapes :

- une étape A à courant constant $I_1$,
- une étape B à tension constante $U_1$,
- une étape C à courant constant $I_2$.

Ainsi, en début de charge d'un accumulateur de type IUI, un courant constant $I_1$ est injecté (étape A). Généralement, ce courant est fixé à Ca/5 par les industriels (Ca représentant la capacité de l'accumulateur en Ah) mais ce courant peut être beaucoup plus élevé. Durant cette première étape A à courant constant, la tension suit la courbe 31 jusqu'à ce que la tension aux bornes de l'accumulateur atteigne à un instant $t_{DG}$ la tension de dégagement gazeux ($V_{DG}$), ce qui signifie que l'état de charge est tel que I1 est égal au courant d'acceptance (fin de la zone A, croisement entre la courbe d'acceptance 1 et le profil du courant 22).

A ce moment, une deuxième étape B est entamée dans laquelle la tension aux bornes de l'accumulateur est maintenue à $V_{DG}$. Le profil du courant 22 suit alors la courbe d'acceptance 1.

Lorsque le courant injecté (et donc le courant d'acceptance) devient négligeable (fin de la zone B), une troisième étape C est entamée, durant laquelle un courant constant $I_2$ est injecté. Ce courant est en général fixé à Ca/20. La tension suit alors le profil de la courbe 31 le long de la zone C. La valeur du courant d'acceptance étant négligeable, le courant injecté $I_2$ est assimilé au courant de déstratification. La zone hachurée représente la quantité d'électricité injectée pour la déstratification de l'accumulateur. La charge de l'accumulateur est estimée complète quand la quantité d'électricité injectée pour la déstratification est estimée suffisante.

Les charges de type IUI sont bien adaptées à un temps de charge de douze à quatorze heures. Le temps de charge peut être raccourci mais l'étape de déstratification est indispensable pour la longévité de l'accumulateur. Il est donc possible de raccourcir le temps de charge de l'accumulateur en démarrant plus tôt l'étape C de déstratification, mais ce raccourcissement est limité. En effet, si l'étape C est démarrée alors que le courant d'acceptance est supérieur à $I_2$, alors le courant injecté $I_2$ ne sera utilisé que pour la charge proprement dite. Si le courant de surcharge $I_2$ est augmenté, le courant d'acceptance n'étant plus forcément négligeable, le contrôle de la déstratification devient alors très délicat. Non seulement la valeur du courant de déstratification risque d'être trop élevée, ce qui peut endommager à terme l'accumulateur, mais en plus il devient très difficile d'estimer et donc de contrôler la quantité d'électricité injectée pour la déstratification de l'accumulateur. En pratique, et compte tenu de la variabilité des courbes d'acceptance avec les conditions expérimentales, il est généralement considéré qu'une durée de huit heures constitue la limite basse acceptable pour la durée d'une charge de type IUI.

C'est pourquoi un but de l'invention est de proposer un procédé de charge d'un accumulateur qui permette de contrôler à tout moment la déstratification de l'accumulateur et donc de pouvoir raccourcir le temps de charge tout en gardant le contrôle de la quantité d'électricité injectée pour la déstratification de l'accumulateur.

Bien que les étapes de surcharge à travers la réaction d'électrolyse affectent un rendement de conversion faradique de l'accumulateur, elles homogénéisent la concentration de l'électrolyte (déstratification) en provoquant, par convection forcée, un brassage de l'électrolyte. Il est donc admis, qu'une fois la tension de dégagement gazeux atteinte, l'application d'un courant, supérieur au courant d'acceptance, a les effets positifs de compléter la charge de l'accumulateur et d'homogénéiser l'électrolyte ; et les effets négatifs de faire chuter le rendement faradique et d'arracher de la matière

active des électrodes si ce courant est trop fort.

Un autre but de l'invention est d'éviter ce dernier effet négatif. En effet, il est prévu selon l'invention de contrôler le courant de déstratification injecté à l'accumulateur afin que ce courant ne soit pas trop élevé.

A cet effet, un procédé selon l'invention comprend une ou plusieurs étapes de surcharge au cours de la charge en injectant à l'accumulateur un courant supérieur au courant d'acceptance (injectant ainsi un courant de déstratification) une fois la tension de dégagement gazeux atteinte, le procédé comprend également des étapes de mesure du courant d'acceptance afin de contrôler la déstratification de l'accumulateur.

De manière générale, on impose la valeur du courant de déstratification à appliquer à l'accumulateur. Plus le courant de surcharge est élevé, plus le temps de charge de l'accumulateur est réduit ; mais plus le courant de surcharge est élevé, plus il existe un risque de détérioration de l'accumulateur. Cette valeur est par exemple imposée à une valeur inférieure ou égale à Ca/20 qui est la valeur généralement admise dans l'état de l'art comme étant la valeur maximale du courant admissible par un accumulateur.

Cependant il est à noter que, lorsque l'application le requiert et/ou lorsque la conception de l'accumulateur le permet (par exemple lorsque les matériaux des électrodes sont suffisamment mécaniquement maintenus, notamment par des éléments de séparation afin d'éviter leur arrachement) on peut imposer un courant de surcharge dont la valeur est supérieure à Ca/20, permettant ainsi une réduction du temps de charge.

Alternativement, le courant à appliquer est déterminé à partir d'un temps de charge donné permettant d'avoir un pilotage précis du courant de surcharge à appliquer à la batterie.

A cet effet, durant les phases de surcharge, le courant à appliquer est déterminé à partir d'une quantité d'électricité pour la charge de l'accumulateur proprement dite et d'une quantité d'électricité de déstratification à fournir à l'accumulateur pour provoquer un dégagement gazeux contrôlé. Ainsi, le courant à injecter lors d'une $n^{ième}$ étape de surcharge est donc régi par la formule suivante :

$$I_{INJECTE\ (n)} = I_{ACCEPTANCE\ (n)} + I_{DESTRAT\ (n)} \qquad (1)$$

Le calcul du courant de déstratification $I_{DESTRAT}$ est lié à la quantité d'électricité de déstratification restante ($Q_{Drest}$) (c'est-à-dire la quantité d'électricité de déstratification qu'il reste à injecter à l'accumulateur) par la relation suivante :

$$I_{DESTRAT\,(n)} = \frac{Q_{Drest\,(n)}}{t_{final} - t_{(n)}} \qquad (2)$$

où $t_{final}$ est la durée impartie pour la charge de l'accumulateur,

et $t_{(n)}$ est la durée entre le début de la charge et le début de la $n^{ième}$ étape de surcharge.

La quantité d'électricité de déstratification restante $Q_{Drest}(n)$ à l'étape de surcharge n, est calculée à partir de la différence entre la quantité d'électricité totale de déstratification $Q_{D0}$ qu'il est prévu d'injecter et la quantité d'électricité de déstratification injectée depuis le début de la charge de l'accumulateur jusqu'à la fin de l'étape de surcharge, notée $Q_{D(n-1)}$.

$$Q_{Drest\,(n)} = Q_{D0} - Q_{D(n-1)} \qquad (3)$$

La quantité d'électricité totale de déstratification $Q_{D0}$, quant à elle, est estimée expérimentalement à un pourcentage de la quantité d'électricité totale à charger. La quantité d'électricité totale à charger n'est pas connue a priori. Or il est connu par expérience, que lorsque la tension de dégagement gazeux est atteinte, l'accumulateur est chargé à un taux qui dépend du régime de charge en cours, par exemple 90% environ pour un régime classique de Ca/5. A l'aide

d'une approximation, la quantité d'électricité totale de déstratification $Q_{D0}$ est donc calculée à partir de la quantité d'électricité qui a été injectée à l'accumulateur depuis le début de la charge jusqu'à ce que la tension de dégagement gazeux soit atteinte $Q_{chargée}(t_{DG})$. Par exemple, pour une quantité d'électricité totale de déstratification $Q_{D0}$ évaluée à 7% de la quantité d'électricité totale chargée, le courant de déstratification $I_{DESTRAT}$ calculé à l'étape n de surcharge est, en utilisant la relation (2) :

$$I_{DESTRAT(n)} = \frac{Q_{D0} - Q_{D(n-1)}}{t_{final} - t_{(n)}} \qquad (3)$$

avec :

$$Q_{D0} = 0.07 \times Q_{chargée}(t_{DG}) \qquad (4)$$

Dans le but d'affiner l'approximation faite, il est prévu selon l'invention de recalculer la quantité d'électricité à surcharger restante $Q_{D0}$ à chaque étape de surcharge. En effet, la quantité d'électricité qui a été injectée à l'accumulateur depuis le début de la charge jusqu'au début de l'étape n $Q_{chargée}(n)$ est une meilleure approximation de la quantité d'électricité totale à charger.

Ainsi, au début d'une étape n de surcharge, la quantité d'électricité de déstratification restante $Q_{D0}(n)$ est calculée à partir de la formule suivante (pour une quantité d'électricité totale de déstratification évaluée à, par exemple, 7% de la quantité d'électricité totale chargée) :

$$Q_{D0}(n) = 0.07 \times Q_{chargée}(n) \qquad (5)$$

Comme mentionné précédemment, la fixation et le maintien de la tension de dégagement gazeux $V_{DG}$ aux bornes de l'accumulateur permet de se situer à la limite du dégagement gazeux correspondant. Le courant de déstratification ($I_{DESTRAT}$) est donc considéré comme nul puisqu'il n'y a pas de dégagement gazeux appréciable. Ce qui signifie que le courant mesuré (courant injecté) est alors l'image du courant d'acceptance de l'accumulateur :

$I_{INJECTE} = I_{ACCEPTANCE} + I_{DESTRAT}$

d'où $I_{ACCEPTANCE} = I_{INJECTE} - I_{DESTRAT}$

or $I_{DESTRAT} = 0$,  d'où $I_{ACCEPTANCE} = I_{INJECTE}$ ( $= I_{MESURE}$)

Ainsi à partir d'une mesure du courant d'acceptance $I_{ACCEPTANCE}$ et du calcul du courant de déstratification à injecter $I_{DESTRAT}$, il est possible en additionnant les deux de déterminer la valeur du courant à injecter lors d'une phase de surcharge (appelé « courant de surcharge »), et de contrôler la quantité d'électricité de surcharge injectée à l'accumulateur. Ceci permet d'effectuer une ou plusieurs étapes de surcharge pendant la charge de l'accumulateur même si le courant d'acceptance n'est pas négligeable et ainsi de pouvoir raccourcir le temps de charge de l'accumulateur tout en gardant le contrôle de la quantité d'électricité de déstratification.

La figure 4 est un graphe présentant une courbe 41 représentant la tension aux bornes d'un accumulateur, une courbe 1 représentant la courbe d'acceptance de l'accumulateur et une courbe 43 représentant le courant circulant

entre les électrodes de l'accumulateur.

En référence à la figure 4, un procédé comprend les étapes suivantes:

- a) Une étape I à courant constant $I_1$ durant laquelle la tension monte jusqu'à la limite de dégagement gazeux $V_{DG}$ selon un profil précédemment décrit (figure 3).

b) Une étape II à tension constante maintenue à la tension de dégagement gazeux $V_{DG}$ ; le courant suit alors le profil de la courbe d'acceptance 1 comme expliqué précédemment. La durée de cette étape est très variable et peut même être nulle (étape facultative).

c) Une étape IIIa de mesure du courant d'acceptance. Cette étape consiste à fixer la tension aux bornes de l'accumulateur à la tension de dégagement gazeux. Afin d'éviter d'effectuer une mauvaise mesure du courant d'acceptance, un certain temps de latence est prévu entre la fixation de la tension à la tension de dégagement gazeux et la mesure du courant afin d'éviter des erreurs dues à un état transitoire 44 du courant circulant entre les bornes. Ce temps de latence est généralement estimé à quelques secondes, par exemple 10 secondes.

d) Une étape IIIb de surcharge durant laquelle un courant de surcharge est injecté à l'accumulateur. La valeur de ce courant injecté est déterminée comme expliqué précédemment. Cette étape a une certaine durée prédéterminée, ce qui résulte à l'injection d'un créneau de courant 46 de la valeur du courant injecté.

Avantageusement, il est prévu selon l'invention d'avoir une succession de plusieurs étapes IIIa et IIIb afin de réactualiser régulièrement la valeur de la mesure du courant d'acceptance. La durée et la fréquence des étapes sont prédéterminées par expérience.

En référence à la figure 7, un courant de déstratification supplémentaire est facultativement imposé à la batterie durant les étapes de surcharge, ce courant étant appelé « courant d'équilibrage ». Ainsi, après l'étape II à tension constante, une étape III dite « de déstratification » comprenant une succession de plusieurs étapes IIIa de mesure et IIIb de surcharge afin de réactualiser régulièrement la valeur de la mesure du courant d'acceptance est effectuée (les étapes de mesure ne sont pas représentées) comme expliqué précédemment. Durant cette étape de déstratification III, un courant de surcharge comprenant une partie de déstratification 71 est injecté, ainsi qu'un courant supplémentaire d'équilibrage 70. Ce courant d'équilibrage 70 est calculé à partir d'un pourcentage du courant d'acceptance. Préférentiellement, ce pourcentage est le même que celui utilisé pour calculer la quantité d'électricité totale de déstratification $Q_{D0}$ à partir de la quantité d'électricité totale à charger, avantageusement d'environ 7%. De manière générale, on choisira ledit pourcentage dans une plage allant de 5% à 10%. Cette valeur du courant d'équilibrage 70 est mise à jour régulièrement grâce aux étapes de mesure.

Ce courant d'équilibrage est maintenu imposé à la batterie, même l'étape de déstratification III terminée. En effet, l'étape de déstratification est arrêtée lorsque l'accumulateur est estimé chargé ; cependant, si un utilisateur n'a pas besoin de l'accumulateur à la fin du temps de charge et laisse l'accumulateur dans le dispositif de charge, ce dernier continue la charge de l'accumulateur durant une étape dite « de finition » IV, en continuant d'imposer le courant d'équilibrage 70 à l'accumulateur. Ce courant d'équilibrage permet d'une part de continuer la charge de l'accumulateur et d'autre part, de maintenir un courant de déstratification afin qu'une stratification de l'accumulateur ne se produise pas avec le temps.

Facultativement, cette étape de finition IV est suivie d'une étape de complément V durant laquelle la tension de charge de l'accumulateur est diminuée progressivement par paliers 410 depuis la tension de dégagement gazeux $V_{DG}$ jusqu'à une tension permettant de compenser l'autodécharge de l'accumulateur lorsque celui-ci est à l'état chargé. Cette tension, qui peut être ajustée en fonction de la concentration de l'électrolyte de l'accumulateur, est par exemple de 2,24 V par élément. Une telle étape de complément permet de s'approcher de l'état de charge complète. En effet, l'état de charge complète, au sens strict, est un état asymptotique jamais atteint. L'écart à l'état de charge complète au sens strict correspond à la rémanence, au sein des électrodes, de matière non rechargée (sulfate de plomb) et dont la cinétique de recharge est d'autant plus lente que l'on approche l'état de charge complète au sens strict.

De retour à la figure 4, durant une étape IIIb de surcharge, le courant injecté reste au même niveau (ce qui forme un créneau de courant). Cependant, comme le courant d'acceptance baisse pendant ce créneau, la partie déstratification du courant injecté augmente. Ce qui peut représenter un danger pour l'accumulateur si le courant de surcharge est trop fort. Afin de résoudre ce problème, il est prévu, selon l'invention que le courant injecté durant une étape IIIb soit décroissant. Cette décroissance du courant injecté décroit selon une décroissance estimée du courant d'acceptance afin que la partie déstratification du courant injecté reste sensiblement à la même valeur ; ce qui, de plus, améliore le contrôle de la quantité d'électricité surchargée.

La figure 5 présente un exemple d'une étape IIIb avec une décroissance estimée. Sur la figure 5, la courbe 51 représente le courant injecté et la courbe 53 représente la décroissance réelle du courant d'acceptance. La décroissance

estimée est généralement prédéterminée par expérience. Sur cet exemple la décroissance estimée est linéaire mais la décroissance peut être encore estimée encore plus finement (notamment à l'aide d'une régression exponentielle, polynomiale ou linéaire par morceaux). Ainsi tout au long d'une étape de surcharge IIIb, le courant de déstratification 52 reste à peu près constant.

En référence à la figure 6 qui représente un profil de tension 61 aux bornes d'un accumulateur lors d'une transition entre une étape IIIb et une étape IIIa. Il est prévu, selon l'invention, d'effectuer un créneau de tension 63 avant l'établissement du niveau de tension tel que durant ce créneau, la valeur de la tension soit inférieure à la tension de dégagement gazeux $V_{DG}$. Ce créneau de tension permet de réduire la durée de l'état transitoire 44 (voir figure 4) du courant en début d'étape IIIa cité précédemment. Il est également prévu que pendant ce créneau, la valeur du courant circulant entre les bornes de l'accumulateur soit nulle ou négative (par exemple en ouvrant le circuit de charge entre les bornes de l'accumulateur).

Cette technique permet d'effectuer une charge d'accumulateurs avec une déstratification acceptable d'une durée allant de 2h à 6h.

Cette même technique permet d'effectuer une charge d'un accumulateur, avec une déstratification acceptable, d'une durée inférieure à 2h, en augmentant le courant de déstratification au-delà des valeurs communément admises, soit de manière dérogatoire, soit parce que la constitution de l'accumulateur le permet.

## Revendications

1. Procédé pour charger un accumulateur au plomb, comprenant une étape de surcharge (IIIb) durant laquelle un courant de surcharge est imposé à l'accumulateur, comprenant une étape de mesure (IIIa) d'un courant d'acceptance (1), le courant de surcharge étant supérieur au courant d'acceptance mesuré, **caractérisé en ce que** le courant de surcharge décroît selon une décroissance estimée du courant d'acceptance (53) durant l'étape de surcharge.

2. Procédé selon la revendication 1, dans laquelle la décroissance estimée est une décroissance linéaire.

3. Procédé selon la revendication 1 ou 2, **caractérisé en ce que** le courant de surcharge a une valeur supérieure à Ca/20, Ca étant la capacité de l'accumulateur en Ampère-heure.

4. Procédé pour charger un accumulateur au plomb selon l'une des revendications 1 à 3, **caractérisé en ce que** l'étape de mesure (IIIa) du courant d'acceptance est mise en oeuvre une fois une tension de dégagement gazeux ($V_{DG}$) imposée à l'accumulateur.

5. Procédé pour charger un accumulateur au plomb selon l'une des revendications 1 à 4, **caractérisé en ce que** l'étape de mesure est effectuée après un temps de latence donné.

6. Procédé pour charger un accumulateur au plomb selon l'une des revendications 1 à 5, **caractérisé en ce qu'**au début de l'étape de mesure du courant d'acceptance (IIIa), la tension aux bornes de l'accumulateur suit un créneau (63) dont la valeur est inférieure à la tension de dégagement gazeux.

7. Procédé pour charger un accumulateur au plomb selon l'une des revendications 1 à 6, **caractérisé en ce qu'**au début de l'étape de mesure du courant d'acceptance (IIIa), la valeur du courant est nulle ou négative.

8. Procédé pour charger un accumulateur au plomb selon l'une des revendications précédentes, **caractérisé en ce que** des étapes de surcharge (IIIb) et des étapes de mesure (IIIa) du courant d'acceptance se succèdent.

9. Procédé pour charger un accumulateur au plomb selon l'une des revendications précédentes, **caractérisé en ce qu'**il comprend en outre une étape de charge à courant constant (I) et/ou une étape de charge à tension constante (II).

10. Procédé pour charger un accumulateur au plomb selon l'une des revendications précédentes, **caractérisé en ce qu'**un courant supplémentaire de déstratification est injecté à l'accumulateur.

11. Procédé pour charger un accumulateur au plomb selon l'une des revendications précédentes, **caractérisé en ce que** le courant de surcharge est déterminé à partir d'une mesure du courant d'acceptance (IIIa) et d'un calcul d'un courant de déstratification.

12. Procédé pour charger un accumulateur au plomb selon la revendication précédente, **caractérisé en ce que** le

courant de déstratification est calculé en fonction d'un temps donné de charge de l'accumulateur.

**13.** Procédé pour charger un accumulateur au plomb selon la revendication précédente **caractérisé en ce que** le courant de déstratification est calculé à partir de la formule suivante :

$$I_{DESTRAT(n)} = \frac{Q_{Drest(n)}}{t_{final} - t_{(n)}}$$

où $I_{DESTRAT(n)}$ est le courant de déstratification injecté à l'accumulateur lors d'une étape de surcharge n, $Q_{Drest}(n)$ est une quantité d'électricité de déstratification qu'il reste à injecter à l'accumulateur déterminé à partir d'une quantité d'électricité totale de déstratification, $t_{final}$ est une durée impartie pour la charge de l'accumulateur, et $t_{(n)}$ est une durée entre le début de la charge et le début de l'étape de surcharge n.

**14.** Procédé pour charger un accumulateur au plomb selon la revendication précédente, **caractérisé en ce que** la quantité d'électricité totale de déstratification est déterminée à partir d'un pourcentage de la quantité d'électricité totale à charger.

**15.** Dispositif de charge d'un accumulateur **caractérisé en ce qu'**il comprend des moyens de mise en oeuvre d'un procédé selon l'une des revendications précédentes.

## Claims

**1.** Method for charging a lead-acid battery, comprising an overcharging step (IIIb) during which an overcharging current is applied to the battery, comprising a measurement step (IIIa) during which an acceptance current (1) is measured, the overcharging current being higher than the measured acceptance current, **characterised in that** the overcharging current decays according to an estimated decay of the acceptance current (53) during the overcharging step.

**2.** Method according to claim 1, wherein the estimated decay is a linear decay.

**3.** Method according to claim 1 or 2, **characterised in that** the overcharging current has a value greater than Ca/20, Ca being the capacity of the battery in Ampere-hours.

**4.** Method for charging a lead-acid battery according to one of claims 1 to 3, **characterised in that** the acceptance current measurement step (IIIa) is implemented once a gassing voltage ($V_{DG}$) is applied to the battery.

**5.** Method for charging a lead-acid battery according to one of claims 1 to 4, **characterised in that** the measurement step is carried out after a given latency time.

**6.** Method for charging a lead-acid battery according to one of claims 1 to 5, **characterised in that** at the start of the acceptance current measurement step (IIIa) the voltage at the terminals of the battery follow a gap (63), the value of which is less than the gassing voltage.

**7.** Method for charging a lead-acid battery according to one of claims 1 to 6, **characterised in that** at the start of the acceptance current measurement step (IIIa), the value of the current is zero or negative.

**8.** Method for charging a lead-acid battery according to one of the preceding claims, **characterised in that** overcharging steps (IIIb) and measurement steps (IIIa) of the acceptance current follow each other.

**9.** Method for charging a lead-acid battery according to one of the preceding claims, **characterised in that** it moreover comprises a constant current charging step (I) and/or a constant voltage charging step (II).

**10.** Method for charging a lead-acid battery according to one of the preceding claims, **characterised in that** an additional destratification current is injected into the battery.

**11.** Method for charging a lead-acid battery according to one of the preceding claims, **characterised in that** the overcharging current is determined from an acceptance current measurement (IIIa) and a calculation of the destratification current.

**12.** Method for charging a lead-acid battery according to the preceding claim, **characterised in that** the destratification current is calculated as a function of a given battery charging time.

**13.** Method for charging a lead-acid battery according to the preceding claim, **characterised in that** the destratification current is calculated from the following formula:

$$I_{DESTRAT(n)} = \frac{Q_{Drest(n)}}{T_{final} - t_{(n)}}$$

where $I_{DESTPAT(n)}$ is the destratification current injected into the battery during an overcharging step n, $Q_{Drest(n)}$ is a quantity of destratification electricity that remains to be injected into the battery determined from a total quantity of destratification electricity, $T_{final}$ is a time allotted for the charging of the battery, and $t_{(n)}$ is a time between the start of the charging and the start of the overcharging step n.

**14.** Method for charging a lead-acid battery according to the preceding claim, **characterised in that** the total quantity of destratification electricity is determined from a percentage of the total quantity of electricity to be charged.

**15.** Device for charging a lead-acid battery, **characterised in that** it comprises means for implementing a method according to one of the preceding claims.

**Patentansprüche**

**1.** Verfahren zum Laden eines Bleiakkumulators, umfassend einen Überlastungsschritt (IIIb), in dem ein Überlastungsstrom an den Akkumulator angelegt wird, umfassend einen Messschritt (IIIa) eines Aufnahmestroms (1), wobei der Überlastungsstrom höher ist als der gemessene Aufnahmestrom, **dadurch gekennzeichnet, dass** der Überlastungsstrom während des Überlastungsschritts entsprechend einer geschätzten Abnahme des Aufnahmestroms (53) abnimmt.

**2.** Verfahren gemäß Anspruch 1, wobei die geschätzte Abnahme eine lineare Abnahme ist.

**3.** Verfahren gemäß Anspruch 1 oder 2, **dadurch gekennzeichnet, dass** der Überlastungsstrom einen Wert über Ca/20 aufweist, wobei Ca die Kapazität des Akkumulators in Amperestunden ist.

**4.** Verfahren zum Laden eines Bleiakkumulators gemäß einem der Ansprüche 1 bis 3, **dadurch gekennzeichnet, dass** der Messschritt (IIIa) des Aufnahmestroms stattfindet, wenn eine Entgasungsspannung (VDG) an den Akkumulator angelegt ist.

**5.** Verfahren zum Laden eines Bleiakkumulators gemäß einem der Ansprüche 1 bis 4, **dadurch gekennzeichnet, dass** der Messschritt nach einer gegebenen Latenzzeit durchgeführt wird.

**6.** Verfahren zum Laden eines Bleiakkumulators gemäß einem der Ansprüche 1 bis 5, **dadurch gekennzeichnet, dass** am Anfang des Aufnahmestrom-Messschritts (IIIa) die Spannung an den Akkumulatorklemmen einem Auftastimpuls (63) folgt, dessen Wert geringer ist als die Entgasungsspannung.

**7.** Verfahren zum Laden eines Bleiakkumulators gemäß einem der Ansprüche 1 bis 6, **dadurch gekennzeichnet, dass** zu Beginn des Aufnahmestrom-Messschritts (IIIa) der Stromwert Null oder negativ ist.

**8.** Verfahren zum Laden eines Bleiakkumulators gemäß einem der vorherigen Ansprüche, **dadurch gekennzeichnet, dass** Überlastungsschritte (IIIb) und Messschritte (IIIa) des Aufnahmestroms aufeinander folgen.

9. Verfahren zum Laden eines Bleiakkumulators gemäß einem der vorherigen Ansprüche, **dadurch gekennzeichnet, dass** es außerdem einen Ladungsschritt bei konstantem Strom (I) und/oder einen Ladungsschritt bei konstanter Spannung (II) umfasst.

10. Verfahren zum Laden eines Bleiakkumulators gemäß einem der vorherigen Ansprüche, **dadurch gekennzeichnet, dass** ein zusätzlicher Strom zur Entschichtung in den Akkumulator eingespeist wird.

11. Verfahren zum Laden eines Bleiakkumulators gemäß einem der vorherigen Ansprüche, **dadurch gekennzeichnet, dass** der Überlastungsstrom ausgehend von einer Messung des Aufnahmestroms (IIIa) und einer Berechnung eines Entschichtungsstroms bestimmt wird.

12. Verfahren zum Laden eines Bleiakkumulators gemäß dem vorherigen Anspruch, **dadurch gekennzeichnet, dass** der Entschichtungsstrom in Abhängigkeit von einer gegebenen Ladungszeit des Akkumulators berechnet wird.

13. Verfahren zum Laden eines Bleiakkumulators gemäß dem vorherigen Anspruch, **dadurch gekennzeichnet, dass** der Entschichtungsstrom ausgehend von folgender Formel berechnet wird:

$$I_{DESTRAT(n)} = \frac{Q_{Drest(n)}}{t_{final} - t_{(n)}}$$

worin IDESTRAT(n) der Entschichtungsstrom ist, der bei einem Überlastungsschritt n in den Akkumulator eingespeist wird, QDrest(n) eine Entschichtungs-Elektrizitätsmenge ist, die zur Einspeisung in den Akkumulator übrig bleibt, die ausgehend von einer Entschichtungs-Gesamtelektrizitätsmenge bestimmt wird, tfinal ein Zeitraum ist, der für die Ladung des Akkumulators vorgesehen ist, und t(n) ein Zeitraum zwischen dem Beginn des Ladens und dem Beginn des Überlastungsschritts n ist.

14. Verfahren zum Laden eines Bleiakkumulators gemäß dem vorherigen Anspruch, **dadurch gekennzeichnet, dass** die Entschichtungs-Gesamtelektrizitätsmenge ausgehend von einem prozentualen Anteil der zu ladenden Gesamtelektrizitätsmenge bestimmt wird.

15. Vorrichtung zum Laden eines Akkumulators, **dadurch gekennzeichnet, dass** sie Mittel zur Durchführung eines Verfahrens gemäß einem der vorhergehenden Ansprüche umfasst.

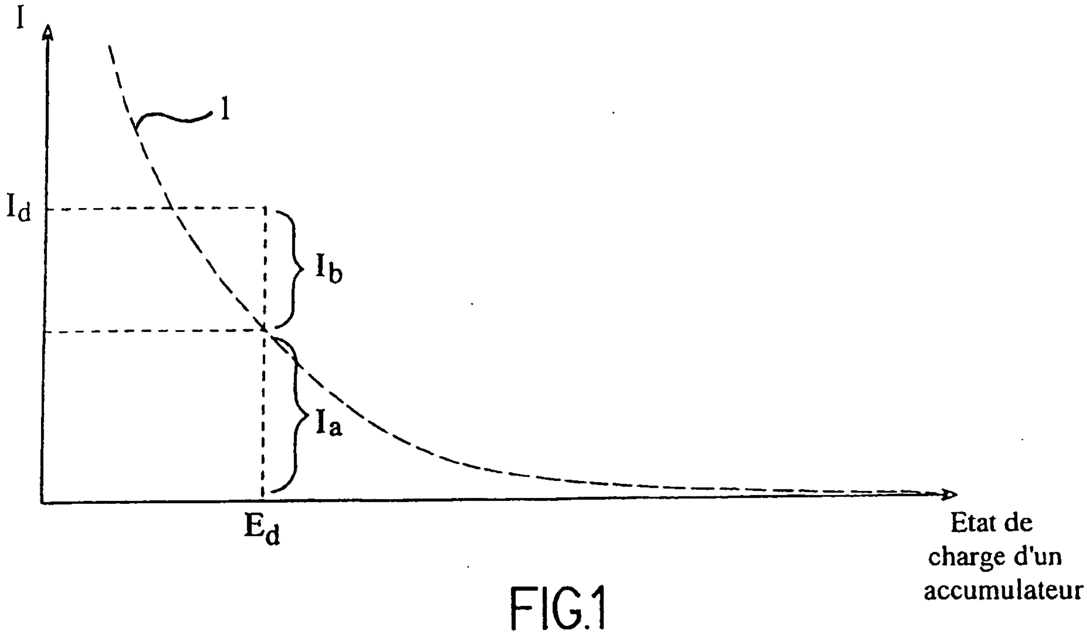
I
1
$I_d$
$I_b$
$I_a$
$E_d$
Etat de
charge d'un
accumulateur

FIG.1

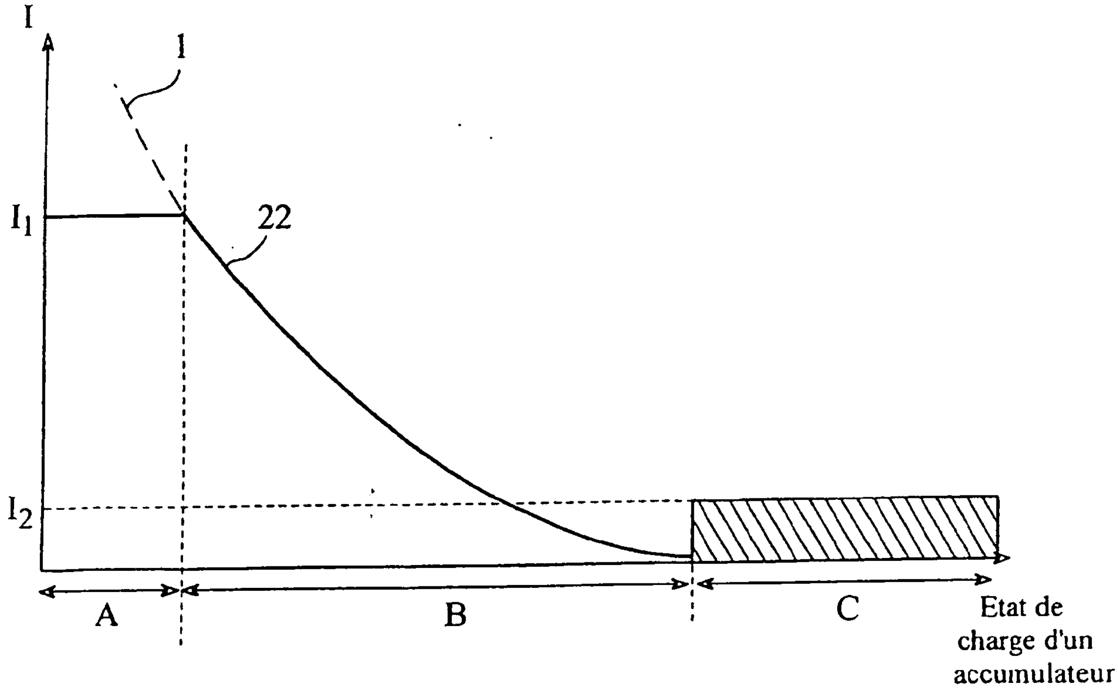
I
1
$I_1$
22
$I_2$
A
B
C
Etat de
charge d'un
accumulateur

FIG.2

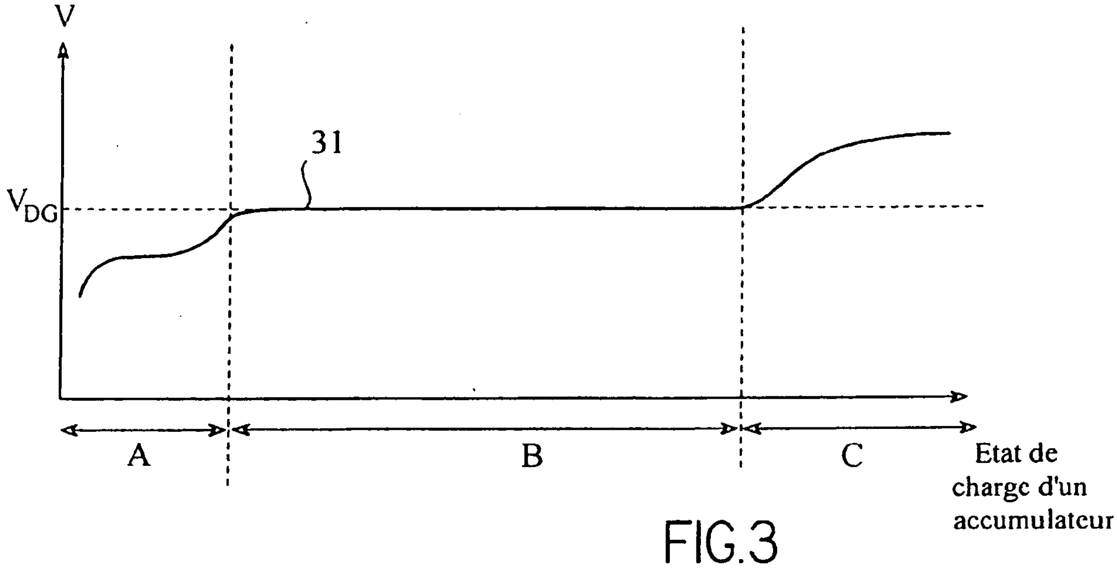
V
31
$V_{DG}$
A
B
C
Etat de charge d'un accumulateur

FIG.3

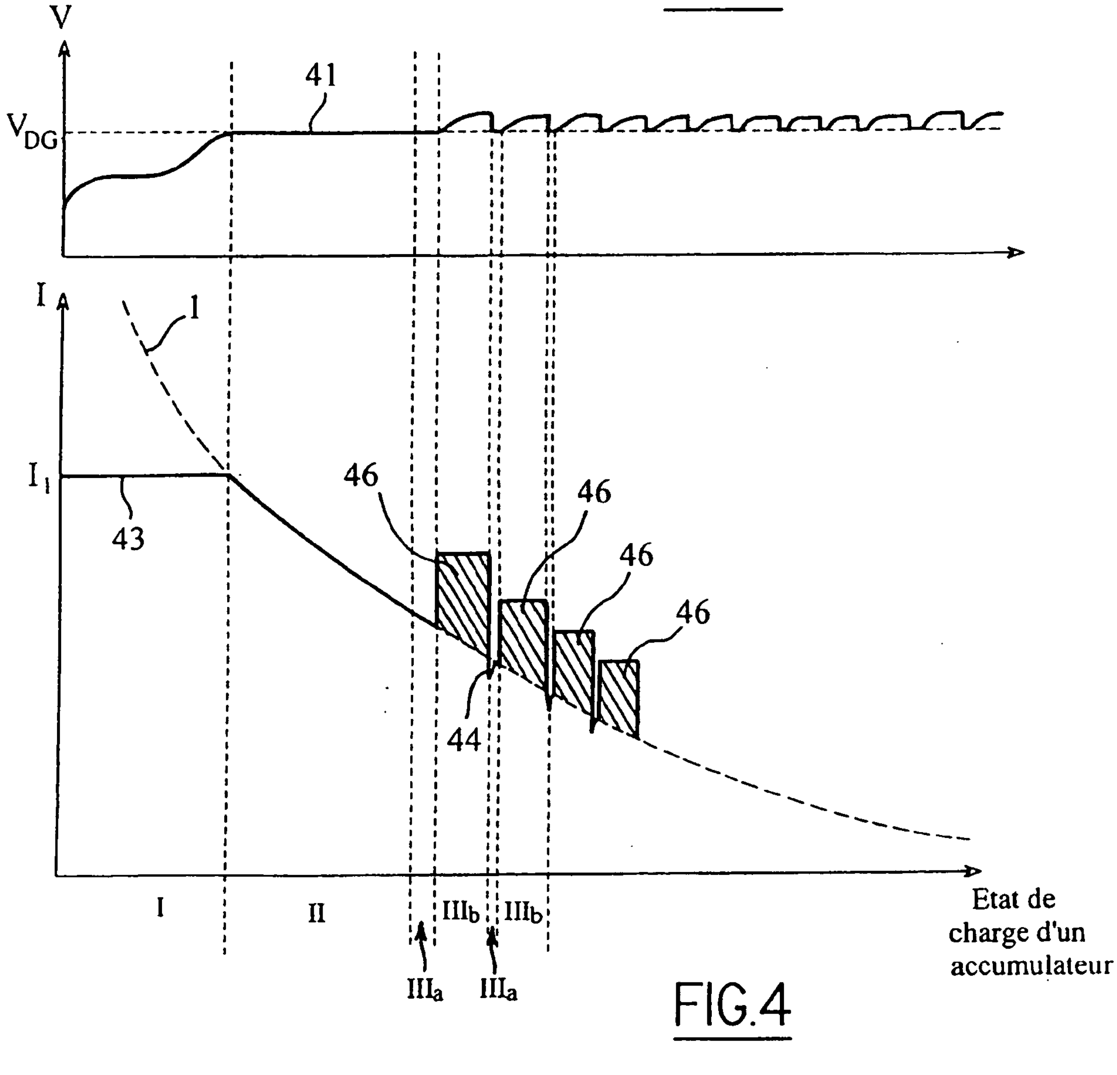
V
41
$V_{DG}$
I
1
$I_1$
43
46
46
46
46
44
I
II
IIIb
IIIb
IIIa
IIIa
Etat de charge d'un accumulateur

FIG.4

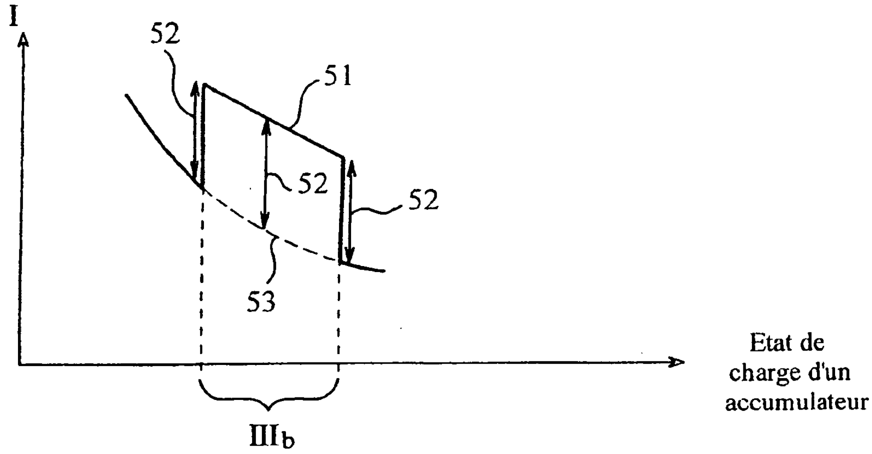
I
52
51
52
52
53
Etat de charge d'un accumulateur
IIIb

FIG.5

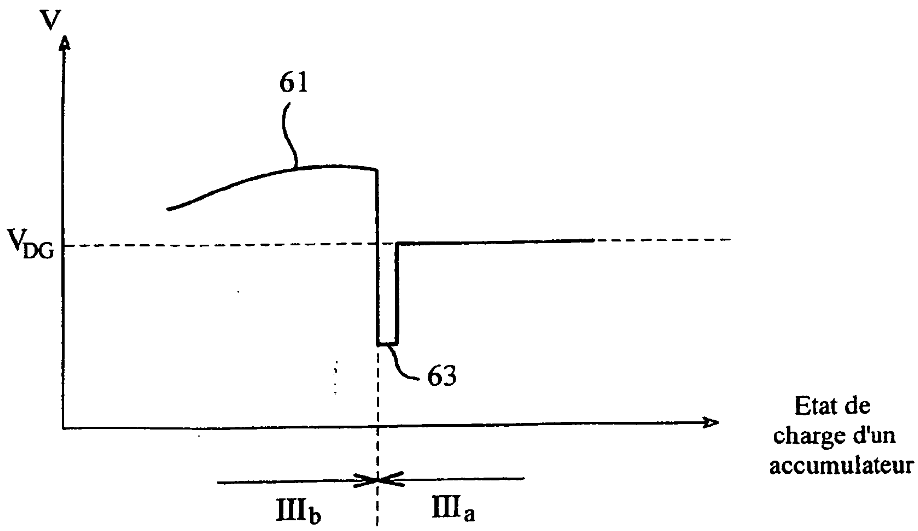
V
61
VDG
63
Etat de charge d'un accumulateur
IIIb
IIIa

FIG.6

FIG. 7

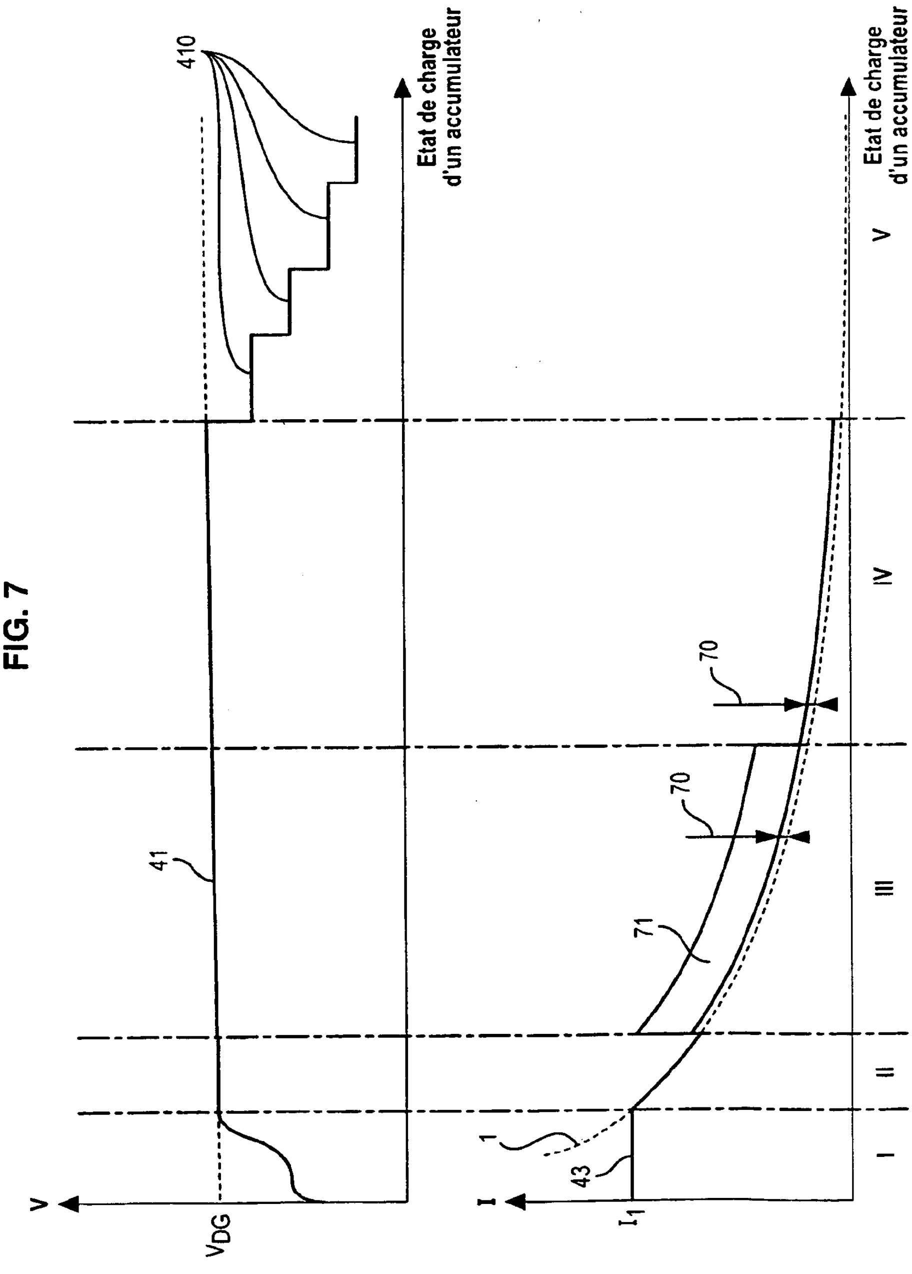
V
$V_{DG}$
41
410
Etat de charge d'un accumulateur
I
$I_1$
43
1
71
70
70
I
II
III
IV
V
Etat de charge d'un accumulateur

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 10128637
- US 20030094927 A
- US 6229285 B
- US 6008624 A
- EP 1587202 A